# EUROPÄISCHE PATENTSCHRIFT

(11) **EP 2 241 075 B1**
(45) Veröffentlichungstag und Bekanntmachung des Hinweises auf die Patenterteilung: **18.11.2015**
(21) Anmeldenummer: 08786562.2
(22) Anmeldetag: 29.07.2008
(51) Int. Cl.: G06F 9/455, H04L 29/06, H04W 84/02

(54) **VERWENDUNG DES WLAN-STANDARDS FÜR EINE C2C-KOMMUNIKATION DURCH HINZUFÜGEN VON NEUEN PAKETTYPEN**
USE OF THE WLAN STANDARD FOR C2C COMMUNICATION BY ADDING NEW PACKET TYPES
UTILISATION DE LA NORME WLAN POUR UNE COMMUNICATION C2C PAR AJOUT DE NOUVEAUX TYPES DE PAQUETS

(30) Priorität: 06.12.2007 DE 102007059023; 29.07.2008 DE 102008035419
(43) Veröffentlichungstag der Anmeldung: 20.10.2010
(73) Patentinhaber: Continental Teves AG & Co. oHG, 60488 Frankfurt (DE)
(72) Erfinder: STÄHLIN, Ulrich, 65670 Eschborn (DE); GROTENDORST, Thomas, 65760Eschborn (DE)
(74) Vertreter: Bonn, Roman Klemens
(86) Internationale Anmeldenummer: PCT/EP2008/059924
(87) Internationale Veröffentlichungsnummer: WO 2009/071348

(56) Entgegenhaltungen:
- EP-A- 1 286 506
- US-A1- 2007 021 133
- US-B1- 6 865 609

## Beschreibung

Die vorliegende Erfindung betrifft Verfahren und Vorrichtungen zum Selektieren von über eine WLAN-Verbindung übertragenen Daten.

Die im folgenden diskutierte Car-to-Car Communication (C2C-Communication = Kraftfahrzeug-zu-Kraftfahrzeug-Kommunikation) ist ein vom Car-to-Car-Communication-Konsortium (C2C-CC), einem Zusammenschluss mehrerer Automobilhersteller, definierter Begriff. C2C-CC erarbeitet für die Fahrzeug-zu-Fahrzeug-Kommunikation und für die Kommunikation der Fahrzeuge mit Infrastruktur-Einrichtungen (Ampeln, etc.) einen offenen Industriestandard.

Basis für solche Car-to-Car-Funksysteme können drahtlose Kommunikationssysteme in Form von WLANs (Wireless Local Area Networks) gemäß beispielsweise dem von der IEEE unter der Standardbezeichnung 802.11 definierten Standard sein (s. z.B.: IT-Wissen, Das große Onlinelexikon für Informationstechnologie).

C2X-Kommunikation umfasst C2C-Kommunikation (Fahrzeug-zu-Fahrzeug-Kommunikation) und Kommunikation zwischen einem Fahrzeug und einer weiteren Einrichtung, die kein Fahrzeug ist, wie beispielsweise einer Infrastruktureinrichtung (Ampel, etc.).

Für eine Fahrzeug- zu- X-Kommunikation (C2X-Kommunikation) wäre eine WLAN- Implementierung nach dem allerdings noch nicht freigegebenen Standard 802.11p vorstellbar. Diese Unterform des WLAN- Standards 802.11 zeichnet sich durch die Möglichkeit einer Ad-hoc-Kommunikation und hohe Reichweiten aus. Ad-hoc-Kommunikation ist ein Modus, bei dem spontan (ad hoc) mindestens zwei Teilnehmer (Funkeinrichtungen beispielsweise in Fahrzeugen) miteinander kommunizieren, wobei eine Kommunikation auch von einem Teilnehmer über mehrere die Kommunikation als Zwischenstationen weiterleitende Teilnehmer zu einem Endziel erfolgen kann. Neben der ad-hoc-Modus-Kommunikation kennt WLAN auch einen Infrastrukturmodus, welcher mit Hilfe von Basisstationen (Access-Point) arbeitet.

Handelsübliche WLAN-Router haben mit dem derzeit verwendeten Funkstandard nach IEEE / 802.11a/b/g/n den Nachteil, dass sie relativ lange Aufbauzeiten für die Kommunikation benötigen (Kanalaufbau-Latenzzeiten), was die Einsetzbarkeit reduziert. Jedoch weisen die genannten Standards 802.11 a/b/g/n deutlich höhere Datenraten auf als 802.11p, was sie wiederum für Multimedia-Anwendungen interessant macht.

Aufgabe der vorliegenden Erfindung ist es, unter Vermeidung der genannten Nachteile eine effiziente C2X-Kommunikation zu ermöglichen. Die Aufgabe wird jeweils durch die Gegenstände der unabhängigen Patentansprüche gelöst.

Die Erfindung erlaubt eine Verwendung von 802.11-WLAN-Übertragungsverfahren (insbesondere 802.11a oder 802.11b oder 802.11g oder 802.11n) unter Einsatz handelsüblicher WLAN-Funktechnik sowohl für eine C2X-Kommunikation wie auch für eine Kommunikation anderer Inhalte (beispielsweise für eine Internet/http/etc.

Kommunikation, im Internet "surfen" etc) unter Einsatz derselben WLAN-Funktechnik-Geräte im Kraftfahrzeug. Dabei können die sehr gute Reichweite und die relativ kurzen Verbindungsaufbauzeiten von vorhandenen WLAN-Standards wie 802.11a/b/g/n effizient genutzt werden.

Eine bedeutende Implementierung der Erfindung ist dabei die Erweiterung des MAC-Layers des WLAN-Standards 802.11 (beispielsweise 802.11 a/b/g/n), um einen (für die erfindungsgemäße C2X-Kommunikation verwendbaren) Datenpakettyp (beispielsweise Frame- Typ 3 oder Frame- Typ 2 mit einem der (MAC-Layer-Header-) Frame- Subtypen 8 bis 15 (die noch nicht verwendet werden), der von bestehenden WLAN-Implementierungen ignoriert wird, der aber modifizierten Implementierungen den Aufbau einer effektiven C2X-Kommunikation parallel (also beispielsweise gleichzeitig und/oder über dasselbe WLAN-Kommunikations-Endgerät) zu sonstiger WLAN-Kommunikation (z.B. Benutzung des Internets) ermöglicht.

Gemäß den Patentansprüchen betrifft die Erfindung ein Verfahren zum Filtern von über eine WLAN-Verbindung an einen Empfänger in einem Kraftfahrzeug übertragenen Daten, wobei von einer Filtereinrichtung (beispielsweise einem erweiterten MAC-Software-Treiber) anhand zumindest des in einem Daten-Frame enthaltenen Frame-Typs (z.B. "3"; oder "2" mit Subtypen) entschieden wird, an welche Einrichtung (C2X-Daten verarbeitende Einrichtung oder http-Daten verarbeitende Einrichtung) der jeweilige Daten-Frame übergeben wird.

Das Dokument US20070021133 beschreibt ein Verfahren zur drahtlosen Kommunikation und bezieht sich auf Push-to-Talk Technologie. Der Datentyp wird anhand eines Kennzeichners erkannt und zu dem entsprechenden Teilnehmer geschickt.

Dabei kann anhand des Frame-Typs eines Daten-Frames entschieden werden, ob der Daten-Frame an eine C2X-Einrichtung oder an eine andere (Fahrzeug-seitige) Einrichtung (beispielsweise http oder Internet-Daten weiterverarbeitende Einrichtung (z.B. Internet-Browser)) übergeben werden.

Die Entscheidung, an welche Einrichtung die Daten- Frames übertragen werden, kann auf einem Frame-Typ ("3") oder auch auf einer Kombination aus einem Frame-Typ und einem bestimmten (MAC-Layer-Header-) Frame- Subtyp (für den Frame-Typ "2" einer der (MAC-Layer-Header-)Frame- Subtypen "8", "9", "10", "11", "12", "13", "14", "15") beruhen.

Die Daten können insbesondere mit einem 802.11a- oder b- oder g- oder n-Standard übertragen werden.

Neben einer Filterung von empfangenen Daten betrifft die Erfindung auch ein Verfahren zum Senden von Daten-Frames über eine seitens eines Kraftfahrzeugs installierte Datenverbindung, wobei von einer C2X-Einrichtung (beispielsweise einem C2X-Controller-Modul im Fahrzeug) mit einer Frame-Typ-Kennzeichnung (Typ 2 mit Subtypen 8 bis 15 oder Typ 3 etc) versehen werden, während von anderen Fahrzeug-seitigen Einrichtungen (http/Internet/Multimedia-Daten verarbeitende Einrichtungen) kommende, zu versendende Daten mit einer anderen Frame-Typ-Kennzeichnung versehen werden.

Ferner betrifft die Erfindung eine Empfangseinrichtung für eine Fahrzeug- seitige Implementierung mit einer Filtereinrichtung zum Entscheiden über die Weiterleitung von empfangenen Daten- Frames an eine C2X-Einrichtung (C2X) oder andere Einrichtung (http/Internet-Browser/Multimedia etc.) anhand von im MAC- Layer-Header des Daten- Frames angegebenen Typs ("3"; "2" mit bestimmten Subtypen).

Die Erfindung betrifft ferner eine Sendeeinrichtung zur Implementierung in einem Fahrzeug und zum Senden von Daten- Frames, mit einer Kennzeichnungseinrichtung zum Kennzeichnen (vor dem Versenden) von von einer C2X-Einrichtung stammenden Datenpaketen mit (nur oder zumindest) einem Frame-Typ ("2" mit Subtyp 8 bis 15 oder "3") und zum Kennzeichnen von von einer anderen Fahrzeug-seitigen Einrichtung stammenden (Internet/http/Multimedia etc.) Datenpaketen mit einem anderen Frame-Typ.

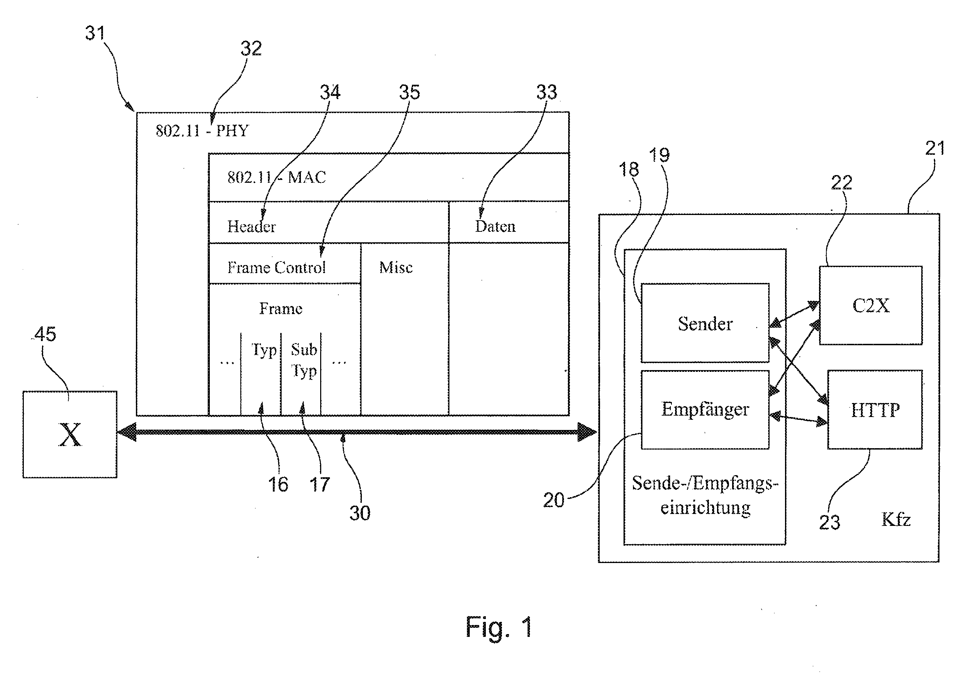

Weitere Merkmale und Vorteile der Erfindung ergeben sich aus den Patentansprüchen und der nachfolgenden Beschreibung eines Ausführungsbeispiels anhand der Zeichnung. Dabei zeigt
Fig. 1 schematisch das Versenden und den Empfang von Datenpaketen seitens eines Fahrzeugs über eine WLAN-Verbindung unter Berücksichtigung von Frame-Typen.

Der 802.11 Standard definiert im Wesentlichen zwei Schichten/Layers:
- Der physical layer definiert das physikalische Transportmedium (Frequenz, Modulation ...) und den rudimentären Transport von Datenbytes.
- Der MAC- layer ist auf etwas höherer Ebene für Datensicherung, Datenflusssteuerung und Teilnehmerverwaltung zuständig, was unter anderem durch verschiedene Typen von Datenpaketen/Frames geschieht (ein Daten-Frame kann ein Datenpaket sein, beispielsweise ein Datagramm auf Schicht 2 des OSI-Modells). Damit ermöglicht es der MAC-Layer unter anderem, Datenpakete sicher über WLAN zu definierten Empfangsstationen (beispielsweise in einem Fahrzeug) zu transportieren.

Aus höheren Schichten (des OSI- Standard- Modells) stammende Daten (beispielsweise aus http-basierten Anwendungen stammende Daten) werden von einer MAC-Layer-Einrichtung in einen Frame verpackt, der einen Header, die eigentlichen Daten (Nutzdaten) und eine Frame-Check-Sequenz umfasst. Der Header wiederum beinhaltet unter anderem ein Feld "Frame Control" (35), das wiederum den Typ des Frames (zum Beispiel Daten-Frame oder Control-Frame) und den Subtyp des Frames enthält. Dieser Aufbau ist für alle 802.11 MAC-Frames gleich.

Der Standard 802.11 hat für einige Typen und Subtypen von Frames noch keine Anwendungen definiert, so dass diese für zukünftige Erweiterungen frei sind und solche Typen und Subtypen von aktuellen Implementierungen (http/Internet-Browser, Multimedia, etc.) ignoriert werden, so dass diese im Sinne dieser Erfindung verwendet werden können. Zum Beispiel könnte die allgemeine Typnummer 3 zur Kennzeichnung von C2X-Kommunikation betreffenden Daten-Frames verwendet werden oder es könnten (für einen Frame mit der Frame- Typ-Nr. 2) die Subtypen 8 bis 15 eines Daten-Frames zur Kennzeichnung von Fahrzeug-zu-X (C2X-Kommunikation) betreffenden Daten-Frames und damit zum Ermöglichen einer Selektion dieser Frames für C2X-Anwendungen/ Einrichtungen verwendet werden.

Für die Implementierung kann ein MAC-Software-Treiber verwendet werden. Ein derartiger erweiterter MAC-Software-Treiber könnte nun Frames oder entsprechend alle Pakete mit der entsprechenden C2X-Typ-Kennung aus dem Paketstrom, den er von einem Physical Layer bekommt, herausfiltern und direkt an ein C2X-Controller-Modul weitergeben (beispielsweise über eine Software-Schnittstelle oder Ethernet, etc.) und Pakete, die von einem C2X-Controller kommen, in entsprechend aufgebaute Frames verpacken und an den Physical Layer zum weiteren Versenden weitergeben. Damit wäre die normale MAC- Zugangsregelung oder der zwar sichere, aber dafür langwierige Verbindungsaufbau für C2X-Frames umgangen. Das C2X-Controller-Modul könnte anhand von Mechanismen/Algorithmen wie beispielsweise den bei NOW (Network On Wheel) entwickelten eine C2X-Kommunikation aufbauen - mit C2X-spezifischen Funktionen wie zum Beispiel geographischem Routing. Andere Quellen für Mechanismen/Algorithmen sind das C2C-CC und die IEEE 1609. Für einfache Funktionen, wie zum Beispiel die Warnung vor Rettungsfahrzeugen mittels eines Broadcast sind diese Mechanismen/Algorithmen jedoch nicht notwendig. Indem ein bereits vorhandenes Feld für die Typerkennung in den MAC-Paketen für die Erweiterung verwendet wird, würde mit einem so modifizierten Router weiterhin auch eine andere Kommunikation (zum Beispiel http/Internet/Multimedia-Kommunikation) möglich sein. C2X-Kommunikation wäre ein einfaches Software-Add-On für handelsübliche WLAN-Router. Beim Einbau von WLAN-Funktechnik in Fahrzeuge könnte hierdurch die dann vorhandene Hardware nur durch Änderung der Software auch schon für C2X-Kommunikation verwendet werden.

Als Router kann dabei herkömmliche Hardware verwendet werden. Durch die immer größere Verbreitung von mobilen Geräten mit WLAN ist es jedoch auch möglich, diese zum Beispiel mit Bluetooth an Fahrzeug-seitige Geräte zu koppeln und dann das WLAN der mobilen Geräte als Router zu verwenden.

Bisherige Ansätze, C2X-Kommunikation mit handelsüblichen WLAN-Routern mit handelsüblichen Ethernet-Protokollen darzustellen (UDP) ohne parallel sonstige (zum Beispiel http/Internet/Multimedia) Kommunikation, oder die alternative Verwendung von auf C2X spezifizierten Routern (zum Beispiel beim NOW Network On Wheels-Ansatz) erzielen nicht die erfindungsgemäßen Vorteile.

Fig. 1 zeigt schematisch einen Daten-Frame 31 mit einem physcial layer nach 802.11-PHY (Bezugszeichen 32), einem MAC-layer nach 802.11-MAC mit NutzDaten 33 und einem Header 34, welcher Header 34 einen Frame- Control- Datensatz 35 enthält, der) den Frame- Typ 16 (beispielsweise Typnummer "2" oder Typnummer "3") und eine Angabe des Subtyps (beispielsweise "8" bis "15") mit dem Bezugszeichen 17 sowie sonstige Angaben ("...") enthält. Der Datensatz (Frame etc. "1") wird von einer Sende-/Empfangseinrichtung 18 (mit einem Sender 19 und einem Empfänger 20) die in einem Kraftfahrzeug 21 angeordnet oder montiert ist, gesendet oder empfangen.

Wenn ein Daten-Frame 31 von einer Sender/Empfangseinrichtung 18 seitens des Fahrzeugs 21 empfangen wird, wird anhand des in dem Daten-Frame 31 angegebenen Datentyps 16 alleine -oder aufgrund des im Daten-Frame 31 angegebenen Datentyps 16 ("2") und eines im Daten-Frame 31 angegebenen Subtyps 17 ("8", "9", "10" ... "15")- entschieden, ob der Daten-Frame an eine C2X-Einrichtung 22 (die beispielsweise Daten betreffend ankommende Rettungsfahrzeuge oder eine in Fahrtrichtung befindliche Ampel mit bestimmter Ampelphase bearbeiten / anzeigen) oder an eine sonstige Kommunikationseinrichtung 23 (z.B. zum surfen im Internet) übergeben werden. Entsprechend werden von der C2X-Einrichtung 22 kommende Daten vom Sender 19 mit einer Angabe 16 eines die C2X-Kommunikation repräsentierenden Frame-Typs ("2") -oder mit einer Angabe 16 eines Frame-Typs ("3") und einer Angabe 17 eines Frame- Subtyps ("8" bis "15")-versehen und über eine Luftschnittstelle 30 (also über die Luft per Funk) an einen Empfänger 45 (in einem Fahrzeug oder in einer Infrastruktureinrichtung) übermittelt und dort empfangen und weiterverarbeitet.

## Patentansprüche

1. Verfahren zum Entscheiden über die Weiterübertragung von über eine WLAN- Verbindung nach IEEE 802.11 (30) übertragenen Daten - Frames (31) an einen Empfänger (20), der in sich in einem Kraftfahrzeug (21) befindet,
**dadurch gekennzeichnet,**
**dass** anhand eines in einem empfangenen Daten-Frame (31) ob die Daten (13) an eine C2X-Daten verarbeitende Einrichtung (22) oder eine andere Daten verarbeitende Einrichtung (23) angegebenen Frame- Typs (16: "2"; "3") entschieden wird, im Fahrzeug (21) übertragen werden, wobei hierzu eine Erweiterung des MAC-Layers des WLAN-Standards 802.11 um einen Frame-typ erfolgt.

2. Verfahren nach Anspruch 1, **dadurch gekennzeichnet, dass** anhand nur eines in einem empfangenen Daten-Frame (31) angegebenen Frame-Typs (16: "3") entschieden wird, an welche Einrichtung (22; 23) der Daten-Frame (31) übertragen wird.

3. Verfahren nach Anspruch 1, **dadurch gekennzeichnet, dass** anhand eines in einem empfangenen Daten-Frame (31) angegebenen Frame-Typs (16: "2") und eines Frame- Subtyps (17: "8"-"15") entschieden wird, an welche Einrichtung (22; 23) der Daten-Frame (31) übertragen wird.

4. Verfahren nach einem der vorhergehenden Ansprüche, **dadurch gekennzeichnet, dass** die Daten (13) an die C2X-Einrichtung (22) oder andere Einrichtung (23) durch eine Ethernet-Schnittstelle oder Software-Schnittstelle übergeben werden.

5. Verfahren nach einem der vorhergehenden Ansprüche **dadurch gekennzeichnet, dass** ein Daten-Frame mit einem Frame-Typ ("3") an eine C2X-Einrichtung (22) übergeben wird.

6. Verfahren nach einem der vorhergehenden Ansprüche **dadurch gekennzeichnet, dass** der Empfänger (20) die Daten über eine Luftschnittstelle gemäß einem WLAN-802.11 Standard, insbesondere 802.11a oder 802.11b oder 802.11g oder 802.11n erhält.

7. Verfahren zum Senden eines Daten-Frames (31) über eine WLAN- Verbindung nach IEEE 802.11 (30) an einen Empfänger (45) in einem Fahrzeug,
**dadurch gekennzeichnet,**
**dass** Daten- Frames (31) mit Daten (13) von einer C2X-Daten verarbeitenden Einrichtung (C2X Controller Modul 22) mit zumindest einer dies repräsentierenden Frame- Typ- Kennzeichnung (16) versehen werden,
während Daten- Frames (31) mit Daten (13) von einer anderen (23) als der C2X-Daten verarbeitenden Einrichtung (22) mit einer anderen Frame- Typ-Kennzeichnung (16) als der für von der C2X-Daten verarbeitenden Einrichtung (22) stammende Daten verwendeten Frame- Typ- Kennzeichnung (16) versehen werden, bevor sie gesendet (an 45) werden.

8. Empfangseinrichtung (20) in einem Fahrzeug,
**dadurch gekennzeichnet,**
**dass** die Empfangseinrichtung eine Entscheidungseinrichtung (18) zum Entscheiden über die Weiterleitung per WLAN nach IEEE 802.11 empfangener Daten- Frames (31) an eine C2X-Daten weiterbearbeitende Einrichtung (22) oder an eine andere Daten weiterbearbeitende Einrichtung (23) basierend auf zumindest dem Frame-Typ (16) der Daten-Frames (31) umfaßt.

9. Empfangseinrichtung (20) nach Anspruch 9, **dadurch gekennzeichnet, dass** die Entscheidungseinrichtung (18) neben dem Frame-Typ (16) auch den Frame-Subtyp (17) des Daten-Frames (31) bei der Entscheidung berücksichtigt.

10. Sendeeinrichtung (9)in einem Fahrzeug zum Senden von Daten-Frames (31),
**dadurch gekennzeichnet,**
**dass** die Sendeeinrichtung einen Kennzeichnungseinrichtung (18) zum Kennzeichnen vor dem Versenden (an 45) von einer C2X-Einrichtung (22) stammenden Daten-Frames mit zumindest einem Frame-Typ (16),
und zum Kennzeichnen von von einer anderen Einrichtung (23) als der C2X-Einrichtung (22) stammenden Daten-Frames (31) mit einem anderen Frame-Typ als dem Frame-Typ ("3", "2"), mit dem von der C2X-Einrichtung stammende Datenpakete gekennzeichnet werden, umfasst.

11. Sendeeinrichtung nach Anspruch 11, **dadurch gekennzeichnet, dass** die Sendeeinrichtung vor dem Senden an einen Empfänger (45) per WLAN bei von einer C2X-Einrichtung stammenden Daten in einem Daten-Frame (31) neben dem Frame-Typ (16) auch den Subtyp (17) des Daten-Frames (31) anders kennzeichnet als bei von einer anderen Einrichtung (23) als der C2X-Einrichtung (22) stammenden Daten.

## Claims

1. Method for deciding about the further transmission of data frames (31) transmitted via a WLAN connection in accordance with IEEE 802.11 (30) to a receiver (20) which is intrinsically located in a motor vehicle (21),
**characterized in that**
a frame type (16: "2"; "3") indicated in a received data frame (31) is used to decide whether the data (13) are transmitted to a device (22) processing C2X data or to a device (23) processing other data in the vehicle (21), an extension of the MAC layer of the WLAN standard 802.11 by one frame type being effected for this purpose.

2. Method according to Claim 1, **characterized in that**, only one frame type (16: "3") indicated in a received data frame (31) is used to decide about that device (22; 23) to which the data frame (31) is transmitted.

3. Method according to Claim 1, **characterized in that** a frame type (16: "2") indicated in a received data frame (31) and a frame subtype (17: "8"-"15") are used to decide about that device (22; 23) to which the data frame (31) is transmitted.

4. Method according to one of the preceding claims, **characterized in that**
the data (13) are transferred to the C2X device (22) or to the other device (23) by an Ethernet interface or software interface.

5. Method according to one of the preceding claims, **characterized in that** a data frame with a frame type ("3") is transferred to a C2X device (22).

6. Method according to one of the preceding claims, **characterized in that**
the receiver (20) receives the data via an air interface on the basis of a WLAN-802.11 standard, particularly 802.11a or 802.11b or 802.11g or 802.11n.

7. Method for sending a data frame (31) to a receiver (45) in a vehicle via a WLAN connection in accordance with IEEE 802.11 (30),
**characterized in that** data frames (31) with data (13) from a device processing C2X data (C2X controller module 22) are provided with at least one frame type identifier (16) representing this,
whereas data frames (31) with data (13) from a device (22) processing data (23) other than the C2X data are provided with a different frame type identifier (16) than the frame type identifier (16) used for data originating from the device (22) processing C2X data, before they are sent (to 45).

8. Reception device (20) in a vehicle, **characterized in that** the reception device comprises a decision device (18) for deciding about the forwarding by WLAN in accordance with IEEE 802.11 of received data frames (31) to a device (22) processing C2X data further or to a device (23) processing other data further on the basis of at least the frame type (16) of the data frames (31).

9. Reception device (20) according to Claim 8, **characterized in that** the decision device (18) takes account not only of the frame type (16) but also of the frame subtype (17) of the data frame (31) in the decision.

10. Transmission device (9) in a vehicle for sending data frames (31), **characterized in that** the transmission device comprises a distinguishing device (18) for distinguishing data frames with at least one frame type (16) which originate from a C2X-device (22) prior to sending (to 45),
and for distinguishing data frames (31) with a frame type other than the frame type ("3", "2") with which data packets originating from the C2X device are distinguished which originate from a device (23) other than the C2X device (22).

11. Transmission device according to Claim 10, **characterized in that** the transmission device, prior to sending to a receiver (45) by WLAN, distinguishes not only the frame type (16) but also the subtype (17) of the data frame (31) differently for data in a data frame (31) which originate from a C2X device than for data which originate from a device (23) other than the C2X device (22).

## Revendications

1. Procédé pour décider de la retransmission de trames (31) de données transmises par une liaison WLAN suivant IEEE 802.11 (30) à un récepteur (20) qui se trouve dans un véhicule (21) automobile,
**caractérisé**
**en ce qu'**au moyen d'un type (16: "2"; "3")de trame indiqué dans une trame (31) de données reçue, on décide si les données (13) sont transmises à un dispositif (22) traitant des données C2X ou à un autre dispositif (23) traitant d'autres données, une extension de la couche MAC de la norme WLAN 802.11 d'un type de trame étant effectuée à cet effet.

2. Procédé suivant la revendication 1,
**caractérisé**
**en ce qu'**à l'aide de seulement un type (16: "3") de trame indiqué dans une trame (31) de données reçue, on décide du dispositif (22; 23), auquel la trame (31) de données est transmise.

3. Procédé suivant la revendication 1,
**caractérisé**
**en ce qu'**à l'aide d'un type (16: "2")de trame indiquée dans une trame (31) de données reçue et d'un sous-type (17:"8"-"15"), on décide du dispositif (22; 23), auquel la trame (31) de données est transmise.

4. Procédé suivant l'une des revendications précédentes,
**caractérisé**
**en ce que** l'on transmet les données (13) au dispositif (22) C2X ou à un dispositif (23) par une interface éthernet ou par une interface logiciel.

5. Procédé suivant l'une des revendications précédentes,
**caractérisé**
**en ce que** l'on remet une trame de données ayant un type ("3") à un dispositif (22) C2X.

6. Procédé suivant l'une des revendications précédentes,
**caractérisé**
**en ce que** le récepteur (20) reçoit les données par une interface radio suivant une norme WLAN-802.11, notamment 802.11a ou 802.11b ou 802.11g ou 802.11n.

7. Procédé d'envoi d'une trame (31) de données par une liaison WLAN suivant IEEE 802.11 (30) à un récepteur (45) dans un véhicule,
**caractérisé**
**en ce que** l'on munit des trames (31) de données par un dispositif de traitement de données C2X (C2X contrôler module 22) d'au moins une caractérisation (16) du type de trame représentant celui-ci,
tandis que l'on munit des trames (31) de données ayant des données (13) par un dispositif (22) traitant d'autres données (23) que les données C2X d'une autre caractérisation (16) de type de trame que la caractérisation (16) de type de trame utilisées pour des données provenant du dispositif (22) traitant des données C2X, avant de les envoyer (à 45).

8. Dispositif (20) de réception dans un véhicule,
**caractérisé**
**en ce que** le dispositif de réception comprend un dispositif (18) de décision pour décider du réacheminement de trames (31) de données reçues par WLAN suivant IEEE 802.11 à un dispositif (22) de retraitement de données C2X ou à un dispositif (23) de retraitement de données reposant sur au moins le type (16) de trame des trames (31) de données.

9. Dispositif (20) de réception suivant la revendication 8,
**caractérisé**
**en ce que** le dispositif (18) de décision prend en compte lors de la décision, outre le type (16) de trame, également le sous-type (17) de trame de trame de la trame (31) de données.

10. Dispositif (9) d'envoi dans un véhicule pour émettre des trames (31) de données,
**caractérisé**
**en ce que** le dispositif d'émission comprend un dispositif (18) de caractérisation pour caractériser, avant l'envoi (à 45) d'une trame de données provenant d'un dispositif (22) C2X, par au moins un type (16) de trame,
et, pour la caractérisation de trames (31) de données, provenant d'un autre dispositif (23) que le dispositif (22) C2X, par un autre type de trame que le type ("3","2") de trame, par lequel des paquets de données provenant du dispositif C2X sont caractérisés.

11. Dispositif d'envoi suivant la revendication 10,
**caractérisé**
**en ce que** le dispositif d'envoi caractérise, avant l'envoi à un récepteur (45) par WLAN pour des données provenant d'un dispositif C2X, dans une trame (31) de données, outre le type (16) également le sous-type (17) des trames (31) de données, autrement que pour des données provenant d'un autre dispositif (23) que le dispositif (22) C2X.
